# EUROPÄISCHE PATENTANMELDUNG

(11) **EP 4 544 971 A1**
(43) Veröffentlichungstag der Anmeldung: **30.04.2025**
(21) Anmeldenummer: 24207860.8
(22) Anmeldetag: 21.10.2024
(51) Int. Cl.: A47J 43/08, A47J 43/07

(54) **MOBILER ADAPTER FÜR EINE KÜCHENMASCHINE**

(30) Priorität: 26.10.2023 DE 202023106205 U; 29.11.2023 DE 202023107063 U
(71) Anmelder: Keller und Koop GmbH, 32758 Detmold (DE)
(72) Erfinder: Koop, Dennis, 32758 Detmold (DE); Keller, Matthias, 32657 Lemgo (DE)
(74) Vertreter: Kayser, Christoph

(57) **Zusammenfassung**

Ein mobiler Adapter (1) mit einem Grundkörper (3) zur Verbindung eines Ergänzungsgerätes mit einer Küchenmaschine, wobei der mobile Adapter (1) auf einem Deckel eines Kochgefäßes der Küchenmaschine und über einer Öffnung des Deckels angeordnet werden kann, um die Verbindung herzustellen, wobei der Grundkörper (3) einen Antriebsstrang aufweist, der sich von einer Antriebseinrichtung der Küchenmaschine durch die Öffnung des Deckels hindurch erstreckt, ist dadurch gekennzeichnet, dass Antriebsstrang (A) eine Getriebeeinrichtung (10) umfasst, mit der eine von dem Antriebsstrang (A) an die Getriebeeinrichtung (10) übertragene Antriebskraft übersetzt oder untersetzt werden kann.

## Beschreibung

Die vorliegende Erfindung betrifft einen mobilen Adapter mit einem Grundkörper zur Verbindung eines Ergänzungsgerätes mit einer Küchenmaschine, wobei der mobile Adapter auf einem Deckel eines Kochgefäßes der Küchenmaschine und über einer Öffnung des Deckels angeordnet werden kann, um die Verbindung herzustellen.

Ein solcher mobiler Adapter ist aus dem Stand der Technik nicht bekannt.

Im Stand der Technik gibt es einerseits elektrische Küchenmaschinen mit einer Antriebseinrichtung und einem Kochgefäß, in dem Speisen zubereitet werden können. Das Kochgefäß kann mit einem Deckel abgedeckt werden, der ein Öffnung aufweist. In der Regel ist die Öffnung in dem Deckel zentral und rund ausgebildet und dient zum Beispiel dazu, Dampf abzuführen. Es gibt für solche Küchenmaschinen Zusatz- oder Ergänzungsgeräte, die auf einem solchen Deckel angeordnet werden können, um über die Öffnung im Deckel auf die ein oder andere Weise mit dem Inneren des Kochgefäßes zusammenzuwirken.

Ein aus dem Stand der Technik bekanntes Zusatzgerät ist zum Beispiel eine Saftpresse. In der DE 10 2021 126 301 A1 ist als Ergänzungsgerät eine Saftpresse beschrieben, die ein domförmiges Presswerkzeug mit Längsrippen aufweist, das über die Antriebswelle direkt angetrieben und in Drehung versetzt wird. Diese Saftpresse ist so ausgebildet, dass diese über ein rohrförmiges Ansatzstück in die Öffnung des Deckels gesteckt werden kann. Diese Saftpresse kann nur mit einem bestimmten Typ einer Küchenmaschine betrieben werden.

Ein weiterer Nachteil einer Antriebskonstruktion des Standes der Technik ist, dass die Drehzahl der Antriebswelle 1:1 auf das (Press-)Werkzeug übertragen wird und dadurch nur mit der von der Antriebseinrichtung der Küchenmaschine vorgegebenen hohen Drehzahl betrieben werden kann. Aus diesem Grunde können nur ausgewählte Lebensmittel, zum Beispiel Zitrusfrüchte, ausgepresst werden, bei denen sich mit hoher Geschwindigkeit die Gewebestrukturen zerstören lassen, um den von diesen gehaltenen Saft freizugeben.

Es gibt aber viele andere Lebensmittel, die zum Entsaften mittels solcher Pressvorgänge ungeeignet sind. Aus diesem Grunde gibt es langsame arbeitende Saftpressen oder Entsafter, sogenannte Slow Juicer. Bei diesen werden die Lebensmittel mit größerer Kraft langsam ausgedrückt, so dass auch viele Nährstoffe im Saft verbleiben und nicht verloren gehen.

Mit den bekannten Küchenmaschinen können solche langsam arbeitenden Saftpressen nicht gekoppelt werden. Die bisher bekannten Zusatz- oder Ergänzungsgeräte übernehmen die hohe Drehzahl der Antriebseinrichtung der Küchenmaschine für das (Press-)Werkzeug.

Die Aufgabe der vorliegenden Erfindung ist daher, einen mobilen Adapter zur Verbindung eines Ergänzungsgerätes mit einer Küchenmaschine zu schaffen, mit dem die Übertragung einer Kraft auf das Werkzeug eines Ergänzungsgerätes im Vergleich zu bekannten Kraftübertragungen optimiert werden kann.

Die Aufgabe wird erfindungsgemäß dadurch gelöst, dass der Grundkörper einen Antriebsstrang aufweist, der eine Getriebeeinrichtung zur Übersetzung oder Untersetzung einer von dem Antriebsstrang an die Getriebeeinrichtung übertragenen Antriebskraft umfasst.

Der mobile Adapter liegt also auf einem Deckel eines Kochgefäßes der Küchenmaschine auf und reduziert durch die untersetzende Getriebeeinrichtung die von der Antriebseinrichtung der Küchenmaschine vorgegebene Drehzahl, so dass das Presswerkzeug im Gefäß der auf den Deckel aufgesetzten Saftpresse mit verminderter Drehzahl und höherer Kraft arbeiten kann. Dadurch wird das Lebensmittel in dem Gefäß der Saftpresse langsamer zerdrückt und somit schonender bearbeitet. Ebenso kann mit einer übersetzenden Getriebeeinrichtung erreicht werden, dass das Presswerkzeug mit höherer Drehzahl als die der Antriebseinrichtung der Küchenmaschine und mit geringerer Kraft arbeiten kann.

Ein weiterer Vorteil der vorliegenden Erfindung ist, dass der Antriebsstrang eine Antriebswelle zwischen der Antriebseinrichtung der Küchenmaschine und der Getriebeeinrichtung und eine Getriebewelle zwischen der Getriebeeinrichtung und einem Anschlussstück für ein Werkzeug des Zusatzgerätes aufweist. Durch die mehrteilige Ausbildung des Antriebsstrangs, insbesondere von der Antriebseinrichtung der Küchenmaschine zu der Getriebeeinrichtung führenden Antriebswelle und der von der Getriebeeinrichtung in Richtung Werkzeug des Ergänzungsgerätes abgehenden Getriebewelle kann die Untersetzung und ggf. auch die Übersetzung konstruktiv optimal umgesetzt werden.

Ein weiterer Vorteil der vorliegenden Erfindung ist, dass die Getriebeeinrichtung ein Untersetzungsgetriebe ist und der erfindungsgemäße Adapter dadurch für Slow Juicer eingesetzt werden kann, die unter geringeren Drehzahlen mit erhöhter Kraft langsam Saft aus Lebensmitteln auspressen.

Es ist auch ein Vorteil der vorliegenden Erfindung, dass die Getriebewelle aus dem Grundkörper austritt. Dadurch wird der Anschluss eines Ergänzungsgerätes in einfacher Weise ermöglicht. Ein solches Ergänzungsgerät kann zum Beispiel einfach mit einem komplementären Anschluss an den Adapter und die Getriebewelle gekoppelt werden.

Ein weiterer Vorteil der vorliegenden Erfindung ist daher, dass die Getriebewelle aus der Standfläche des mobilen Adapters vorsteht. Dadurch ist es möglich, dass die Getriebewelle an die Antriebsmechanik des Werkzeugs in dem Gefäß der Saftpresse angreifen kann.

Es ist ebenfalls ein Vorteil der vorliegenden Erfindung, dass die Standfläche konzentrisch zu der zweiten Antriebswelle ausgebildet ist. Durch die konzentrische Anordnung können Gefäße einer Saftpresse mit rundem Boden gut positioniert werden.

Ein weiterer Vorteil der vorliegenden Erfindung ist auch, dass in dem Grundkörper eine Saft-Abflussöffnung ausgebildet ist. Ein aus dem Gefäß der Saftpresse bodenseitig austretender Saft gelangt über die Saft-Abflussöffnung des Adapters in das Kochgefäß.

Dabei ist es günstig, dass die Saft-Abflussöffnung an einem Umfang des Grundkörpers trichterförmig ausgebildet ist. Dadurch wird verhindert, dass Saft aufgrund höherer Fließgeschwindigkeit zwischen der Saftpresse und dem mobilen Adapter seitlich über den Adapter spritzt oder schwappt.

Ein weiterer Vorteil der vorliegenden Erfindung ist auch, dass an dem Grundkörper eine Anschlusseinrichtung zum lösbaren Ankoppeln eines Auffangbechers ausgebildet ist. An einer solchen Anschlusseinrichtung kann ein Auffangbecher angekoppelt werden, der im Betrieb Pressgut, zum Beispiel Feststoffe, auffängt, die sich beim Pressvorgang gelöst haben.

Dabei ist es vorteilhaft, dass die Anschlusseinrichtung derart ausgebildet ist, dass diese eine Winkelstellung des Auffangbechers in Bezug zu der ersten Antriebswelle erzwingt. Durch die schräge Stellung des Auffangbechers wird ebenfalls verhindert, dass Pressgut über den Rand des Auffangbechers nach außen gelangt und die Umgebung verunreinigt.

Besonders günstig ist es, wenn die Anschlusseinrichtung einen lösbaren Haltering umfasst, der den Auffangbecher umschließt. Ein solcher lösbarer Haltering kann an einem oberen Umfangsrand des Auffangbechers angebracht sein und ein Anschlussteil aufweisen, das so ausgebildet ist, dass sich die Winkelstellung des angekoppelten Auffangbechers beim Ankoppeln einstellt.

Weitere Vorteile der vorliegenden Erfindung, insbesondere aus der Ausgestaltung der Getriebeeinrichtung, ergeben sich aus den weiteren Merkmalen der Unteransprüche.

Eine Ausführungsform der vorliegenden Erfindung wird im Folgenden anhand der Zeichnungen näher beschrieben. Es zeigen:
Diverse Figuren zeigen einen Ausführungsform der vorliegenden Erfindung.

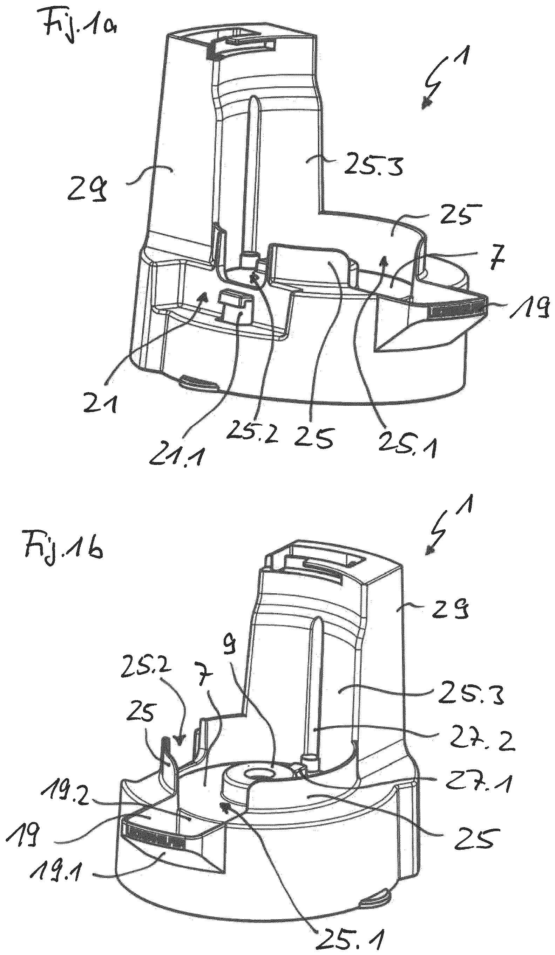

Fig. 1 a eine schematische, perspektivische Ansicht eines erfindungsgemäßen mobilen Adapters von links;
Fig. 1 b eine schematische, perspektivische Ansicht des erfindungsgemäßen mobilen Adapters aus Fig. 1 von rechts;
Fig. 2a eine schematische Draufsichteine Getriebeeinrichtung des mobilen Adapters aus Fig. 1;
Fig. 2b eine Seitenansicht der Getriebeeinrichtung in Fig. 2a;
Fig. 2c eine schematische perspektivische Ansicht der Getriebeeinrichtung aus Figs. 2a oder 2b;
Fig. 2d eine schematische, angeschnittene perspektivische Darstellung der der Getriebeeinrichtung in Figs. 2a, 2b und 2c;
Fig. 3 eine schematische Schnittdarstellung durch ein Verlängerungselements; und
Fig. 4 eine schematische, perspektivische Ansicht eines Halterings des mobilen Adapters aus Fig. 1.

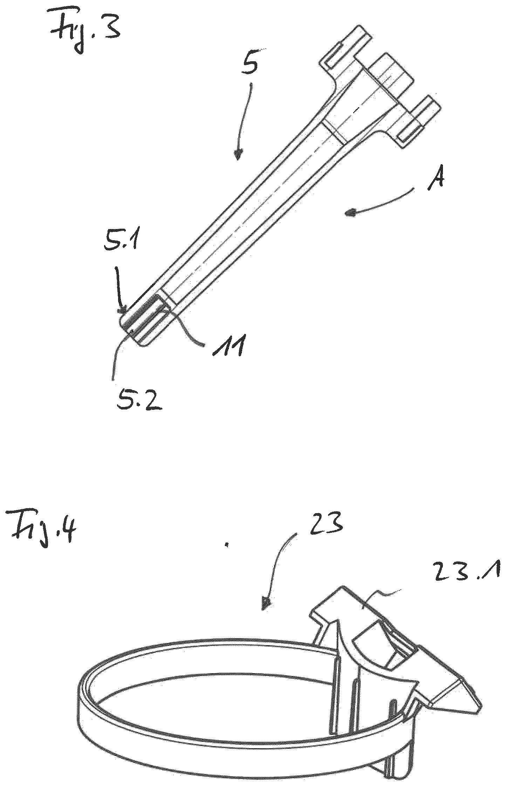

In Fig. 1a und Fig. 1b ist jeweils schematisch und in Perspektive ein mobiler Adapter 1 gemäß vorliegender Erfindung dargestellt. Der mobile Adapter 1 weist einen Grundkörper 3 auf, der auf einen Deckel eines Kochgefä-βes einer elektrischen Küchenmaschine aufgesetzt werden kann. Ein solcher Deckel weist in seinem Zentrum eine Durchgangsöffnung auf, die in der Regel einen Durchmesser von wenigstens 6 cm aufweist. Der mobile Adapter 1 kann mit einer Antriebseinrichtung der Küchenmaschine in Verbindung gebracht werden. In der dargestellten Ausführungsform umfasst der mobile Adapter 1 eine Verlängerungselement 5 (Fig. 3), das im Betrieb durch die Öffnung des Deckels in das Kochgefäß der elektrischen Küchenmaschine eingreift. Das Verlängerungselement 5 weist ein in das Kochgefäß greifendes Ende 5.1 mit einem Anschlussteil 5.2 auf, mit dem die Verbindung zu der Antriebseinrichtung der Küchenmaschine hergestellt werden kann.

In der vorliegenden Beschreibung wird das Verlängerungselement 5 als ein von der Küchenmaschine lösbares Verlängerungsteil dargestellt, das einen Teil eines Antriebsstrangs A desmobilen Adapter 1 bildet. Das Verlängerungselement 5 stellt im Kontext der vorliegenden Erfindung also einen Teil des Antriebsstrangs A des mobilen Adapters 1 dar.

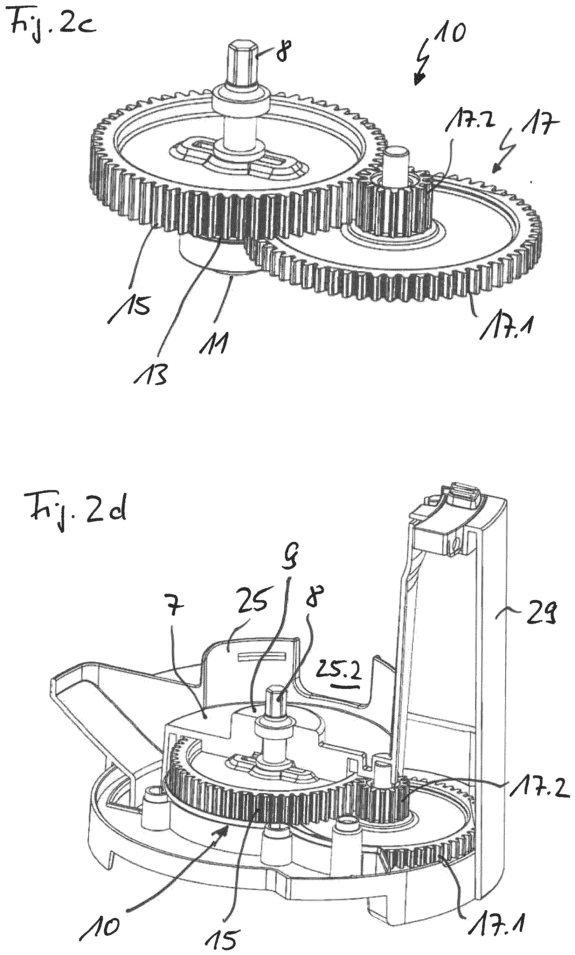

Der Grundkörper 3 weist eine Standfläche 7 auf, auf der ein Boden eines Gefäßes einer Saftpresse aufgesetzt werden kann. Im Zentrum der Standfläche 7 steht eine wenigstens in einem Verbindungsbereich unrunde Getriebewelle 8 vor, die in Fig. 2d dargestellt ist und in den Boden des Zusatzgerätes formschlüssig eingreifen kann, um mit dem Zusatzgerät eine Wirkverbindung herzustellen und ein Werkzeug des Zusatzgeräts oder das Zusatzgerät selbst antreiben zu können. Mit "unrund" ist in der dargestellten Ausführungsform zum Beispiel "sechskantig" gemeint.

Der Antriebsstrang A umfasst eine Getriebeeinrichtung 10. Die Getriebeeinrichtung 10 bildet in der vorliegenden Ausführungsform ein Untersetzungsgetriebe, welches die Drehzahl der Getriebewelle 8 verringert und eine auf das Werkzeug des Ergänzungsgeräts oder das Ergänzungsgerät selbst übertragene Kraft erhöht. In anderen Ausführungsformen kann die Getriebeeinrichtung 10 aber auch ein Übersetzungsgetriebe sein und die Drehzahl der Getriebewelle 8 gegenüber einer Drehzahl der Antriebseinrichtung der Küchenmaschine erhöhen, um dadurch eine dabei auf das Werkzeug des Ergänzungsgerätes oder das Ergänzungsgerät selbst übertragene Kraft zu verringern.

Der Antriebsstrang A umfasst neben der Getriebeeinrichtung und der Getriebewelle 8 auch eine von der Antriebseinrichtung der Küchenmaschine ausgehende und in die Getriebeeinrichtung 10 eingehende Antriebswelle 11. Die Antriebswelle 11 verläuft auf der Antriebsseite der Getriebeeinrichtung 10 und, in der vorliegenden Ausführungsform, in dem Verlängerungselement 5.

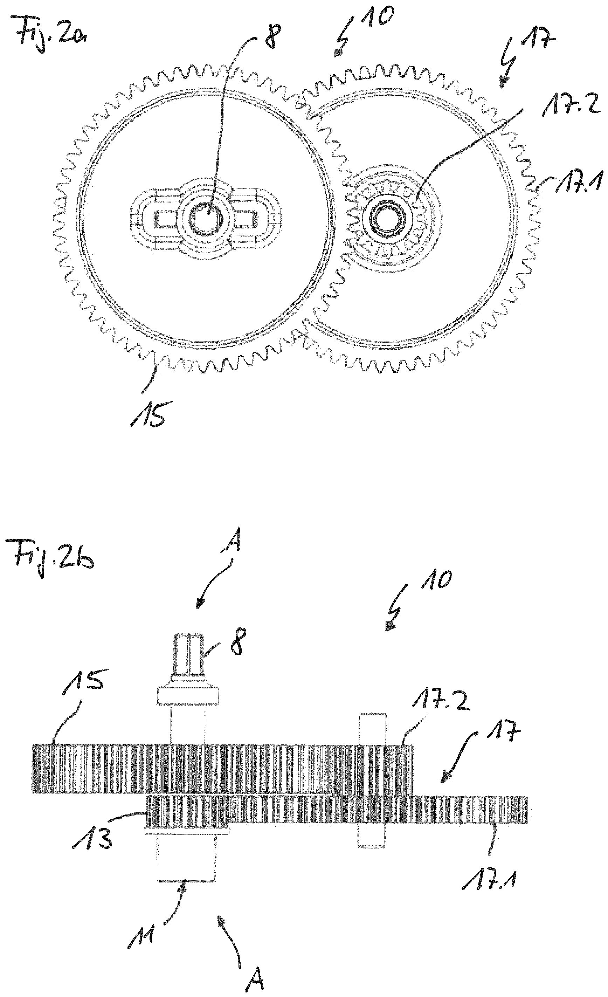

In der Figur 2b ist zu sehen, dass die Getriebeeinrichtung 10 im Grundkörper 3 ein erstes Zahnrad 13 (Fig. 2c, Fig. 2d), das mit der Antriebswelle 11 verbunden ist und einen kleineren Durchmesser aufweist als ein von dem ersten Zahnrad 13 separat ausgebildetes, zweites Zahnrad 15 (Fig. 2a, Fig. 2b und Fig. 2c), das mit der Getriebewelle 8 verbunden ist. Der Durchmesser des zweiten Zahnrades 15 ist also größer als der Durchmesser des ersten Zahnrades 13. Zudem in Fig. 2d zu sehen, dass ist in dem Grundkörper 3 auch ein Doppelzahnrad 17 mit einem ersten Zahnkranz 17.1 einem größeren Durchmesser und einem zweien Zahnkranz 17.2 mit einem kleineren Durchmesser derart angeordnet ist, dass das erste Zahnrad 13 mit dem ersten Zahnkranz 17.1 des Doppelzahnrades 17 kämmt und das zweite Zahnrad 15 des Doppelzahnrades 17 mit dem zweiten Zahnkranz 17.2 kämmt.

Das Zusammenwirken des ersten und zweiten Zahnrades 13, 15 mit dem Doppelzahnrad 17 ist auch in den Figs. 2a, 2b, 2c dargestellt. Das erste Zahnrad 13 mit kleinem Durchmesser kämmt also mit dem großen Durchmesser des ersten Zahnkranzes 17.1 des Doppelzahnrades 17 und das zweite Zahnrad 15 mit dem großen Durchmesser kämmt mit dem zweiten Zahnkranz 17.2 des Doppelzahnrades 17.

In dem Grundkörper 3 ist eine Saft-Abflussöffnung 19 (Fig. 1a, Fig. 1b) ausgebildet, durch die eine in dem Ergänzungsgerät erzeugte Flüssigkeit, zum Beispiel ein in eine als Saftpresse ausgebildeten Ergänzungsgerät ausgedrückter Saft in das Kochgefäß der elektrischen Küchenmaschine gelangen kann. Die Saft-Abflussöffnung 19 ist trichterförmig ausgebildet, um zum Beispiel den ausgepressten oder ausgedrückten Saft gut aufnehmen zu können. In der dargestellten Ausführungsform sind zwei gegenüberliegende Trichterwände 19.1 und 19.2 der Saft-Abflussöffnung 19 quer zur horizontalen Hauptströmungsrichtung mit unterschiedlichen Neigungswinkeln zu einer vertikalen Hauptströmungsrichtung ausgebildet. Dadurch wird die Energie des fließenden Saftes oder einer anderen Flüssigkeit aufgenommen und von der horizontalen in die vertikale Hauptströmungsrichtung gelenkt.

An dem Grundkörper 3 ist auch eine Anschlusseinrichtung 21 zum lösbaren Ankoppeln eines Auffangbechers (nicht dargestellt) ausgebildet. Der Auffangbecher gehört zu dem mobilen Adapter 1, kann aber auch als einzelnes Zubehörteil gehandelt werden. Die Anschlusseinrichtung 21 ist derart ausgebildet, dass diese eine Winkelstellung des Auffangbechers in Bezug zu der Antriebswelle 11 erzwingt. Die Winkelstellung ergibt sich durch einen spitzen Winkel zwischen einer Längsachse des Auffangbechers und einer Längsachse der Antriebswelle. Durch die Schrägstellung oder Winkelstellung des Auffangbechers können feste Bestandteile des Pressgutes sicherer in den Auffangbecher befördert werden. Durch die Schrägstellung bildet der Auffangbecher auch einen Spritzschutz.

In der dargestellten Ausführungsform umfasst die Anschlusseinrichtung 21 einen lösbaren Haltering 23 (Fig. 4), der den Auffangbecher umschließt. Der Haltering weist an seinem Umfang ein erstes Anschlussstück 23.1 auf, das derart ausgebildet ist, dass das erste Anschlussstück 23.1 mit einem zweiten Anschlussstück 21.1 am Umfang des Grundkörpers zusammenpasst und mit diesem eine Verbindungherstellen kann, die zu der Winkelstellung des Auffangbechers führt. In der vorliegenden Ausführungsform greift das erste Anschlussstück 23.1 des Halterings 23 in das zweite Anschlussstück 21.1 der Anschlusseinrichtung 21 am Grundkörper 2 lösbar rastend ein. In anderen Ausführungsformen kann die Verbindungstechnik auch anders ausgebildet sein.

Die Standfläche 7 weist eine Begrenzungswand 25 auf, die sich in der dargestellten Ausführungsform über Abschnitte des Umfangs der Standfläche erstreckt. Die Begrenzungswand 25 ist durch eine Saftöffnung 25.1 unterbrochen, die an der Saft-Abflussöffnung 19 ausgebildet ist. Dadurch kann zum Beispiel ausgedrückter oder auch ausgepresster Saft über die Saftöffnung 25.1 in der Begrenzungswand 25 in die Saft-Abflussöffnung 19 eintreten und durch die Öffnung des Deckels auf dem Kochgefäß letztendlich in das Kochgefäß gelangen.

Die Begrenzungswand 25 ist in der vorliegenden Ausführungsform zudem auch durch eine Pressgutöffnung 25.2 unterbrochen. Die Pressgutöffnung 25.2 ist an der Anschlusseinrichtung 21 ausgebildet und ermöglicht dadurch, dass Pressgut durch die Pressgutöffnung 25.2 in den angekoppelten Auffangbecher gelangen kann.

Auf der Standfläche 7 ist ein erstes Drehschutzelement 27.1 ausgebildet. Dieses ist derart ausgebildet, dass dieses eine Drehung des auf der Standfläche 7 positionierten Ergänzungsgerätes, zum Beispiel einer Saftpresse, auf der Standfläche 7 verhindert. Das Ergänzungsgerät steht also drehfest auf der Standfläche 7. In der vorliegenden Ausführungsform ist das erste Drehschutzelement 27.1 eine gerade Wulst in der Standfläche 7, die mit einer entsprechenden Rinne in dem Boden des Ergänzungsgerätes zusammenpasst.

Die Begrenzungswand 25 erstreckt sich an einer der Saftöffnung 25.1 diametral gegenüberliegenden Seite der Standfläche 7 in einen Stützungsabschnitt 25.3. Der Stützungsabschnitt 25.3 begrenzt ein Gehäuseteil 29, das an die Standfläche 7 angrenzt und der Saft-Abflussöffnung 25.1 gegenüberliegt. Der Stützungsabschnitt 25.3 weist ein zweites Drehschutzelement 27.2 auf, das dazu beiträgt, die Lage des Ergänzungsgerätes im Betrieb drehfest zu halten.

### Bezugszeichenliste

- 1: mobiler Adapter
- 3: Grundkörper
- 5: Verlängerungselement
- 5.1: erstes Ende
- 5.2: Anschlussteil
- 7: Standfläche
- 8: Getriebewelle
- 9: Anschlussstück
- 10: Getriebeeinrichtung
- 11: Antriebswelle
- 13: erstes Zahnrad
- 15: zweites Zahnrad
- 17: Doppelzahnrad
- 17.1: erster Zahnkranz
- 17.2: zweiter Zahnkranz
- 19: Saftabflussöffnung
- 19.1: erste Querwand
- 19.2: zweite Querwand
- 21: Anschlusseinrichtung
- 21.2: zweites Anschlussstück
- 23: Haltering
- 23.1: erstes Anschlussstück
- 25: Begrenzungswand
- 25.1: Saftöffnung
- 25.2: Pressgutöffnung
- 25.3: Stützungsabschnitt
- 27.1: erstes Drehschutzelement
- 27.2: zweites Drehschutzelement
- 29: Gehäuseteil
- A: Antriebsstrang

## Patentansprüche

1. Mobiler Adapter (1) mit einem Grundkörper (3) zur Verbindung eines Ergänzungsgerätes mit einer Küchenmaschine, wobei der mobile Adapter (1) auf einem Deckel eines Kochgefäßes der Küchenmaschine und über einer Öffnung des Deckels angeordnet werden kann, um die Verbindung herzustellen, wobei der Grundkörper (3) einen Antriebsstrang aufweist, der sich von einer Antriebseinrichtung der Küchenmaschine durch die Öffnung des Deckels hindurch erstreckt,
**dadurch gekennzeichnet,**
**dass** Antriebsstrang (A) eine Getriebeeinrichtung (10) umfasst, mit der eine von dem Antriebsstrang (A) an die Getriebeeinrichtung (10) übertragene Antriebskraft übersetzt oder untersetzt werden kann.

2. Mobiler Adapter nach Anspruch 1,
**dadurch gekennzeichnet,**
**dass** der Antriebsstrang (A) eine Antriebswelle (11) zwischen der Antriebseinrichtung der Küchenmaschine und der Getriebeeinrichtung (10) und eine Getriebewelle (8) zwischen der Getriebeeinrichtung (10) und einem Anschlussstück (9) für ein Werkzeug des Zusatzgerätes aufweist.

3. Mobiler Adapter nach Anspruch 1 oder 2,
**dadurch gekennzeichnet,**
**dass** die Getriebeeinrichtung (10) ein Untersetzungsgetriebe ist.

4. Mobiler Adapter nach einem der Ansprüche 1 bis 3,
**dadurch gekennzeichnet,**
**dass** die Getriebewelle (8) aus dem Grundkörper (3) austritt.

5. Mobiler Adapter nach einem der Ansprüche 1 bis 4,
**dadurch gekennzeichnet,**
**dass** der Grundkörper (3) eine Standfläche (7) für das Ergänzungsgerät aufweist.

6. Mobiler Adapter nach Anspruch 5,
**dadurch gekennzeichnet,**
**dass** die Getriebewelle (8) aus der Standfläche (7) austritt.

7. Mobiler Adapter nach einem der Ansprüche 1 bis 6,
**dadurch gekennzeichnet,**
**dass** die Standfläche (7) konzentrisch zu der Getriebewelle (8) ausgebildet ist.

8. Mobiler Adapter nach einem der vorstehenden Ansprüche, **dadurch gekennzeichnet,**
**dass** in dem Grundkörper (3) eine Saft-Abflussöffnung (19) ausgebildet ist.

9. Mobiler Adapter nach Anspruch 10,
**dadurch gekennzeichnet,**
**dass** die Saft-Abflussöffnung (19) an einem Umfang des Grundkörpers (3) trichterförmig ausgebildet ist.

10. Mobiler Adapter nach einem der vorstehenden Ansprüche,
**dadurch gekennzeichnet,**
**dass** an dem Grundkörper (3) eine Anschlusseinrichtung (21) zum lösbaren Ankoppeln eines Auffangbechers ausgebildet ist.

11. Mobiler Adapter nach Anspruch 10,
**dadurch gekennzeichnet,**
**dass** die Anschlusseinrichtung (21) derart ausgebildet ist, dass diese eine Winkelstellung des Auffangbechers in Bezug zu der Antriebswelle (11) erzwingt.

12. Mobiler Adapter nach Anspruch 11,
**dadurch gekennzeichnet,**
**dass** die Winkelstellung einen spitzen Winkel zwischen einer Längsachse des Auffangbechers und einer Längsachse der Antriebswelle einschließt.

13. Mobiler Adapter nach einem der Ansprüche 10 bis 12, **dadurch gekennzeichnet,**
**dass** die Anschlusseinrichtung (21) einen lösbaren Haltering (23) umfasst, der den Auffangbecher umschließt.

14. Mobiler Adapter nach einem der vorstehenden Ansprüche,
**dadurch gekennzeichnet,**
**dass** die Getriebeeinrichtung (10) ein erstes Zahnrad (13) umfasst, das mit der Antriebswelle (11) verbunden ist, und ein zweites Zahnrad (15) umfasst, das mit der Getriebewelle (8) verbunden ist, wobei das erste Zahnrad (13) einen kleineren Durchmesser als das zweite Zahnrad (15) aufweist.

15. Mobiler Adapter nach einem der vorstehenden Ansprüche,
**dadurch gekennzeichnet,**
**dass** die Getriebeeinrichtung (10) ein Doppelzahnrad (17) aufweist, das mit der Antriebswelle (11) verbunden ist und mit einem ersten Zahnkranz (17.1) mit einem großen Durchmesser an das erste Zahnrad (13) angreift und mit einem zweiten Zahnkranz (17.2) mit kleinem Durchmesser an das zweite Zahnrad (15) angreift.

16. Küchenmaschine mit einem mobilen Adapter nach einem der Ansprüche 1 bis 15.

17. Anordnung eines mobilen Adapters nach einem der Ansprüche 1 bis 15 auf einem Deckel eines Kochgefäßes.
